# EUROPEAN PATENT APPLICATION

(11) **EP 3 831 465 A1**
(43) Date of publication of application: **09.06.2021**
(21) Application number: 19214195.0
(22) Date of filing: 06.12.2019
(51) Int. Cl.: B01D 53/58, B01J 8/04, C05C 3/00, C05C 9/00, C07C 273/16, B01D 50/00

(54) **APPARATUS AND METHOD FOR PROCESSING EXHAUST GAS**

(71) Applicant: Yara International ASA, 0277 Oslo (NO)
(72) Inventor: Vanmarcke, Luc, B-9971 Eeklo (BE); De Bakker, Peter, 4561 JA Hulst (NL)
(74) Representative: De Clercq & Partners

(57) **Abstract**

The present disclosure is related to a scrubber for removing dust and ammonia from a stream of gas comprising dust and ammonia. The scrubber has an essentially cylindrical shape along a central axis defined by two ends joined by a casing, comprising: (a) one gas inlet adapted to receive the stream of gas comprising dust and ammonia, located on one end of the scrubber; (b) one gas outlet adapted to exhaust a stream of gas depleted of dust and ammonia, located on the casing of the scrubber; (c) a dust filter packing and an ammonia filter packing; (d) two or more internal walls having an essentially circular or polygonal perimeter, each with a smaller diameter than the diameter of the casing, wherein: (i) the internal walls extend from one end to the other end of the scrubber, (ii) the internal walls are concentric, (iii) the gas inlet is located within the circular perimeter set by at least one of said internal walls, and (iv) each internal wall comprises two or more gas passages comprising filter packings, which filter packings can either be dust filter packings or ammonia filter packings, but not both. The present disclosure is also related to the use of a scrubber according to the present invention for the removal of dust and ammonia from a stream of gas comprising dust and ammonia. Finally, the present disclosure is also related to a method for removing dust and ammonia from a stream of gas comprising dust and ammonia.

## Description

### Field of the invention

The present invention relates to the field of preparing urea fertilizers, and more specifically, to the field of processing exhaust gases from a urea plant, the exhaust gas comprising dust and ammonia. A scrubber to remove dust and ammonia from a stream of gas is provided.

### Background of the invention

In chemical plants, scrubbers are used to remove pollutants from a stream of gas. These pollutants can be divided in two groups according to their physical state. The first group of pollutants consists of solid particles having a diameter as small as a few nanometers up to hundreds of micrometers. These particles can comprise inorganic or organic compounds or salts and are collectively referred to as dust. The second group of pollutants consists of gases. If these gases are toxic or dangerous for the environment, strict emission levels are imposed by regulations in most countries. Examples of such gas pollutants are carbon dioxide, carbon monoxide, nitrogen oxides (NOx), sulfur oxides (SOx) and ammonia. If a production process creates a stream of gas containing these pollutants in amounts superior to the legal limits, the stream of gas has to be purified from these pollutants before being released into the atmosphere. This removal may be achieved by passing the stream of gas through a series of filters that are designed to capture the pollutants. A device housing such filters and designed to reduce the amount of pollutants in a stream of gas comprising those pollutants is referred to as a scrubber.

Urea is one of the most important chemicals industrially produced today, around 200 million tons of urea are produced worldwide every year. Most of it (above 90% of total production) is used as a fertilizer in agriculture as a nitrogen source. Urea is produced by reacting ammonia and carbon dioxide. A concentrated melt of urea is produced and processed, for example by granulation or prilling, to provide urea in solid form. The solidification stage takes place in a granulation or prilling equipment where gas is used to cool the hot droplets of urea. During the process, the cooling gas becomes polluted with contaminants such as urea dust and ammonia and needs to be purified before being released into the atmosphere because of environmental concerns and regulations.

Scrubbers are a well-known class of engineering devices that may be used to clean a stream of gas produced in a urea production unit. A stream of polluted gas enters the scrubber and goes through a series of pads, filters or packings, which remove the pollutants from the stream of gas. These filters may be wetted with an acidic, neutral or basic aqueous solution to increase the efficiency of the scrubber. A filter wetted with water can be used to remove urea dust and a filter wetted with an acidic solution, sulfuric acid for example, will be more efficient at removing ammonia from the stream of gas. Ammonia reacts with the acid and forms a highly water-soluble salt, ammonium sulfate for example.

A standard urea scrubber usually comprises a main longitudinal direction where the polluted gas enters the scrubber at one end of the longitudinal direction and exits at the other end. It comprises at one least one urea dust filter and at least one ammonia filter. The size of the scrubber and the number and size of the filters depends on the production rate of the plant where it is installed, the amount of gas flow that needs to be purified and the amount of pollutants that needs to be removed from the stream of gas. These scrubbers may be required to have a certain length to operate correctly and clean the stream of gas sufficiently to achieve a desired level of pollutants. The scrubbers are often built vertically and thus a building with a high ceiling is required to accommodate it. Furthermore, the size of the scrubber, including its diameter, is highly dependent on the amount of gas to be treated: the more gas that needs to be treated, the larger the scrubber must be. In order to avoid such a costly construction, there is a need to develop more compact scrubber designs.

### Summary of the invention

According to one aspect of the invention, a scrubber for removing dust and ammonia from a stream of gas comprising dust and ammonia is provided. The scrubber has an essentially cylindrical shape along a central axis defined by two ends joined by a casing, comprising: (a) one gas inlet adapted to receive the stream of gas comprising dust and ammonia, located on one end of the scrubber; (b) one gas outlet adapted to exhaust a stream of gas depleted of dust and ammonia, located on the casing of the scrubber; (c) a dust filter packing and an ammonia filter packing; (d) two or more internal walls having an essentially circular or polygonal perimeter, each with a smaller diameter than the diameter of the casing, wherein: (i) the internal walls extend from one end to the other end of the scrubber, (ii) the internal walls are concentric, (iii) the gas inlet is located within the circular or polygonal perimeter set by at least one of said internal walls, and (iv) each internal wall comprises two or more gas passages comprising filter packings, which filter packings can either be dust filter packings or ammonia filter packings, but not both.

In another aspect, the use of a scrubber according to the present invention for the removal of dust and ammonia from a stream of gas comprising dust and ammonia is provided.

In another aspect, a method for removing dust and ammonia from a stream of gas comprising dust and ammonia is provided. The method comprises the steps of: a) providing a scrubber according to the present invention; b) directing the stream of gas comprising dust and ammonia, into the gas inlet of the scrubber provided in step a); and c) collecting the gas depleted of dust and ammonia from the gas outlet of the scrubber for further processing.

### Brief description of the figures

The following description of the figures of a specific embodiment of a system according to the present disclosure is only given by way of example and is not intended to limit the present explanation, its application or use. In the figures, identical reference numerals refer to the same or similar parts and features.
Figure 1 describes an external view of an embodiment of a scrubber according to the present invention.
Figure 2 describes a cross-section of an embodiment of a scrubber according to the present invention.
Figure 3 describes a cross-section of another embodiment of a scrubber according to the present invention.
Figure 4 describes a cross-section of another embodiment of a scrubber according to the present invention.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a section" refers to one or more than one section.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

According to one aspect of the invention, a scrubber for removing dust and ammonia from a stream of gas comprising dust and ammonia is provided. The scrubber has an essentially cylindrical shape along a central axis defined by two ends joined by a casing, comprising: (a) one gas inlet adapted to receive the stream of gas comprising dust and ammonia, located on one end of the scrubber; (b) one gas outlet adapted to exhaust a stream of gas depleted of dust and ammonia, located on the casing of the scrubber; (c) a dust filter packing and an ammonia filter packing; (d) two or more internal walls having an essentially circular or polygonal perimeter, each with a smaller diameter than the diameter of the casing, wherein: (i) the internal walls extend from one end to the other end of the scrubber, (ii) the internal walls are concentric, (iii) the gas inlet is located within the circular or polygonal perimeter set by at least one of said internal walls, and (iv) each internal wall comprises two or more gas passages comprising filter packings, which filter packings can either be dust filter packings or ammonia filter packings, but not both.

A limitation of the traditional scrubber design is the velocity of the stream of gas that needs to be cleaned. The volume of gas to be treated, for example in liters per unit of time, and the size of the scrubber sets the velocity of the stream of gas. If the velocity reaches a certain threshold, the efficiency of the filter packings decreases below the maximum value. In a linear scrubber, the velocity of the stream of gas at the scrubber inlet dictates the velocity before the first filter packing. It was found that a scrubber with a circular design was able to process a large gas flow in a limited space.

The scrubber according to the present invention has an essentially cylindrical shape along a central axis defined by two ends joined by a casing. Its circumference may be perfectly circular, but it also may be a polygon with a plurality of faces. The two ends may be flat to facilitate construction and setup in the plant. The scrubber may be setup vertically with a top end and bottom end, or horizontally. The casing and the ends are made of a material suitable for the operating conditions. Such materials are well known in the field of chemical engineering and may comprise several grades of steel and/or aluminum and/or copper. The scrubber comprises a gas inlet on one end, which is designed for receiving the stream of gas comprising dust and ammonia. The stream of gas may comprise different types of gases, such as nitrogen, oxygen, carbon dioxide, carbon monoxide, noble gases, such as helium and argon. It comprises dust and ammonia as pollutants, but may also comprise other types of pollutants, for examples, sulfur oxides (SOₓ), or nitrogen oxides (NOₓ), or additives which have been used in the production process, such as granulation additives. Dust refers to any kind of small solid particles, for example urea particles, urea-based particles or any other particles produced or used in a production plant, in particular a fertilizer production plant, for example dolomite. Urea-based particles refers to any material comprising urea that may comprise other types of nutrient sources commonly produced in the fertilizer industry. In one embodiment, urea-based particles are homogeneous or inhomogeneous particles comprising a component selected from the group of urea, urea calcium sulphate (UCaS), urea calcium nitrate (UCaN), urea magnesium nitrate (UMgN), urea calcium phosphate (UCaP), urea magnesium phosphate (UMgP), urea superphosphate (USP), urea calcium ammonium nitrate (UCAN), urea ammonium sulphate (UAS), urea ammonium phosphate (UAP), urea potassium salts (UK) such as salts derived from mixtures of urea with MPO and/or SOP, or mixtures thereof.

In one embodiment, the stream of gas comprising dust and ammonia originates from a urea-producing unit, for example a granulation equipment, such as a fluidized bed granulator or a prilling tower, or a cooling equipment. In one embodiment, the stream of gas comprising dust and ammonia may comprise nitrogen (about 78 volume%), oxygen (about 21 volume%), argon (about 1 volume%), carbon dioxide, dust and ammonia.

The scrubber comprises one gas outlet adapted to exhaust a stream of gas depleted of dust and ammonia located on its casing. The gas outlet may be located anywhere on the casing, the location may be selected based on the physical constraints of each plant. It may be desirable to install the gas outlet at a height that can easily be reached for facilitating operations and maintenance. The size of the gas outlet may be adapted depending on the amount of gas that is injected into the scrubber. The larger the outlet is, the lower the velocity of the gas at the outlet will be.

The scrubber is divided into three or more circular or polygonal sections delimited by internal walls and the casing wall, each wall having an essentially circular or polygonal perimeter. A polygonal perimeter in particular refers to a perimeter with a plurality of faces. Certain parts of the perimeter may be flat in order to facilitate the positioning of the openings in the internal walls. Each internal wall has a smaller diameter than the diameter of the casing wall. Each internal wall extends from one end of the scrubber to the other end of the scrubber to confine the gas stream in each section. The internal walls are positioned concentric around a common axis to obtain a symmetrical apparatus and facilitate the operations. In particular the internal walls and the casing are positioned concentric around the central axis. Each internal wall comprises two or more openings or gas passages comprising filter packings. The stream of gas injected in the scrubber is divided in sub-streams, where each sub-stream flows through a filter packing and to the next section of the scrubber. For each internal wall, filter packings can either be dust filter packings or ammonia filter packings, but not both types of filter packings. To ensure an even filtering, an internal wall cannot comprise a dust filter packing and an ammonia filter packing. This would cause the stream to be split in two sub-streams that are filtered in a different manner, and an inhomogeneous stream would be formed when the two sub-streams are gathered in the next section or at the gas outlet in the casing wall. Depending on the velocity of the gas stream entering the scrubber or a particular section, more than two filter packings may be necessary to install on each internal wall. Installing several packings on an internal wall divides the stream entering the section in as many sub-streams as packings and lowers the velocity of the stream passing each packing, thus improving the efficiency of the filtering stage. The filter packing may be installed in a number of manners on a wall. The packings are usually available as large rectangles. For example, in a vertically-standing scrubber, the packings may be installed vertically and may cover a large part of a vertical section up to 100% of a vertical section, but they may also cover only 80 to 90% of a vertical section. They may also be installed horizontally, forming a band-shape structure on the wall. To improve their efficiency and absorb more dust or ammonia, the filter packings may be wetted with an aqueous solution. Typically, dust filter packings may be wetted with water, and ammonia filter packings may be wetted with an acidic aqueous solution. The acidic aqueous solution may comprise nitric acid, sulfuric acid, phosphoric acid, and mixtures thereof.

The distance between the internal walls and the distance between the internal wall with the largest diameter and the casing wall may be adjusted based on the requirement of a specific embodiment. Factors such as velocity of gas entering the scrubber, level of dust and ammonia pollutants in the stream of gas may be considered to design the scrubber. For facilitating operations such as maintenance, it may be desirable to keep the walls sufficiently apart so that one or more persons may actually move between the walls and access the filter packings.

In one embodiment, the gas inlet is essentially located at the center of one end of the scrubber. As the internal walls are concentric, locating the gas inlet at the center of one end of the scrubber ensures that the gas stream enters the scrubber within the first internal wall. It also ensures a symmetrical flow in the first section of the scrubber.

In one embodiment, the gas outlet comprises one filter packing which may be an ammonia filter packing. It may be desirable to filter the stream of gas a last time before the stream exits the scrubber. If the level of ammonia after the last internal wall passage is not low enough to meet the requirements, an ammonia filter packing located at the gas outlet in the casing wall may reduce the ammonia levels to a desired level. The filter packing on the gas outlet in the casing wall may also be used to reduce the water content of the stream of gas exiting the scrubber. It may be advantageous to obtain a stream of gas as dry as possible, i.e. with the lowest water content possible, when it leaves the scrubber to facilitate its further processing. To remove water from the stream of gas, the filter packing may be wetted with water to improve the efficiency of the filter packing.

In one embodiment, the internal wall with the smallest diameter comprises two or more filter packings, which are dust filter packings. It may be desirable to first remove the dust impurities from the stream of gas as opposed to ammonia. The ammonia filter packings can also filter out dust impurities, however, if the levels of dust in the stream of gas passing through an ammonia filter packing are too high, the efficiency of the ammonia removal may be impaired. It may be desirable to first remove dust impurities with filter packings designed for this function and obtain a stream of gas with a much lower level of dust impurities before passing the gas through the two or more ammonia filter packings.

In one embodiment, the two or more gas passages are evenly distributed on the circumference of the internal wall. When an internal wall comprises two or more filter packings, it may be an advantage to distribute these packings evenly on the circumference of the internal wall. Doing so ensures that the flow remains symmetrical on a cross-section of the scrubber and that all filtering stages operate with the same efficiency. A non-symmetrical gas flow might cause a higher gas velocity in one filter packing compared to another and place that velocity above the maximum tolerated by the filter packing for optimal efficiency.

In one embodiment, the internal wall with the largest diameter comprises two or more filter packings, which are ammonia filter packings. It may be desirable that the last filtering stage in the scrubber is an ammonia removal stage. As discussed above, it may be desirable to first bring the level of dust ammonia to the required one before removing the ammonia from the stream of gas.

In one embodiment, the scrubber according to the present disclosure comprises two internal walls, wherein the internal wall with the smallest diameter comprises four dust filter packings and the four dust filter packings are evenly distributed on the circumference of the internal wall, the internal wall with the largest diameter comprises three ammonia filter packings and the gas outlet on the casing wall comprises an ammonia filter packing.

In one embodiment, the internal walls comprise the same number of filter packings, which may be dust filter packings or ammonia filter packings, wherein the filter packings have all the same size. When the internal walls have each the same number of filter packings and each filter packings have the same size, the velocity of the gas sub-streams will be identical in each filter packing, facilitating the design of the scrubber. However, in some cases, it may be impossible or undesirable to have the same number of filter packings in each internal wall. Whenever possible, the number of filter packings in the different internal walls may be identical plus or minus one, i.e. the first internal wall may comprise two filter packings, for example dust filter packings, and the second internal wall may comprise three filter packings, for example ammonia filter packings.

In another aspect, the use of a scrubber according to the present invention for the removal of dust and ammonia from a stream of gas comprising dust and ammonia is provided.

In another aspect, a method for removing dust and ammonia from a stream of gas comprising dust and ammonia is provided and comprises the steps of: a) providing a scrubber according to the present invention; b) directing the stream of gas comprising dust and ammonia into the gas inlet of the scrubber provided in step a); and c) collecting the gas depleted of dust and ammonia from the gas outlet of the scrubber for further processing.

When the gas depleted from dust and ammonia is collected, it may be released into the atmosphere as such. It may also be necessary or desirable to further process the stream of gas, for example by removing other impurities still present in the stream of gas. The stream of gas may also be re-used in the facility or plant.

In one embodiment, the method comprises the step adding water, as water droplets, to the stream of gas comprising dust and ammonia before the stream is directed in the scrubber. This step increases the efficacy of the dust filter packing by pre-wetting the dust particles present in the stream of gas comprising dust and ammonia. It is well known in the field on how to perform such a step, for example with water sprayers or sprinklers. The amount of water can be added in such an amount so that the stream of gas entering the scrubber is saturated with water, i.e. the humidity of the stream of gas is 100%.

The embodiments of the device and method according to the invention will now be illustrated by means of the following non-limitative examples.

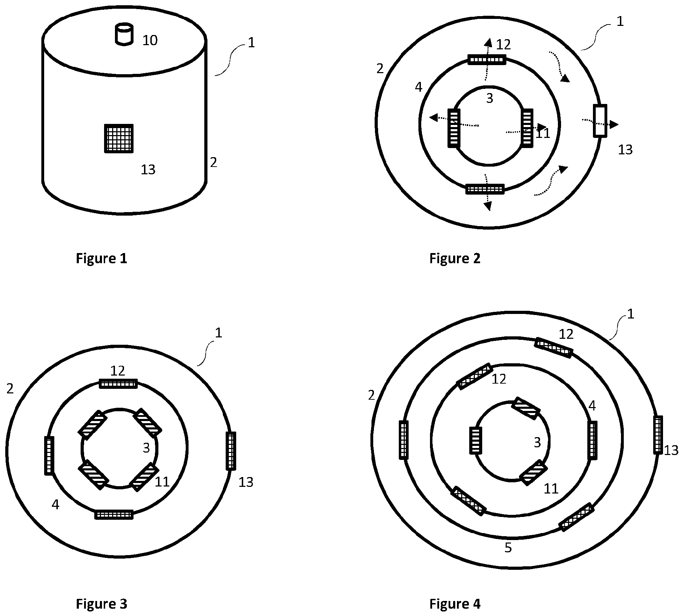

Figure 1 describes an external view of an embodiment of a scrubber according to the present invention. The scrubber **1** comprises an inlet **10** located at the center of the top end of the scrubber and a gas outlet **13** located on the casing **2**. The outlet comprises an ammonia filter packing.

Figure 2 describes a cross-section of an embodiment of a scrubber according to the present invention. The scrubber **1** comprises two internal walls (**3**, **4**). The first internal wall **3** comprises a dust filter packing **11**. The second internal wall **4** comprises one ammonia filter packing **12**. The casing comprises a gas outlet **13**, which does not comprise an ammonia filter packing. The two internal walls and the casing are concentric.

The stream of gas comprising dust and ammonia is injected in the scrubber within the first internal wall **3**. The stream of gas is divided into two sub-streams, wherein each sub-stream goes through one of the two dust filter packings **11**. The arrows represent the gas flows. The two sub-streams enter the second section defined between the first internal wall **3** and the second internal wall **4** to form a new stream of gas depleted of dust. The new stream is divided into two new sub-streams, wherein each sub-stream goes through one of the two ammonia filter packings **12**. The two sub-streams enter the third section of the scrubber **1** between the second internal wall **4** and the casing **2**. The stream of gas flows through the gas outlet **13** and is collected for further processing or release in the atmosphere.

Figure 3 describes a cross-section of another embodiment of a scrubber according to the present invention. The scrubber **1** comprises two internal walls (**3**, **4**). The first internal wall **3** comprises four dust filter packings **11** which are distributed evenly on the circumference of the wall. The second internal wall **4** comprises three ammonia filter packings. The gas outlet **13** located on the casing of the scrubber comprises an ammonia filter packing. The two internal walls and the casing are concentric.

Figure 4 describes a cross-section of another embodiment of a scrubber according to the present invention. The scrubber **1** comprises three internal walls (**3**, **4**, **5**). The first internal wall **3** comprises three dust filter packings **11** which are distributed evenly on the circumference of the wall. The second internal wall **4** comprises three ammonia filter packings. The third internal wall **5** comprises three ammonia filter packings. The gas outlet **13** located on the casing of the scrubber comprises an ammonia filter packing. The three internal walls are concentric.

## Claims

1. A scrubber (1) for removing dust and ammonia from a stream of gas comprising dust and ammonia, having an essentially cylindrical shape along a central axis defined by two ends joined by a casing (2), comprising:
- one gas inlet (10) adapted to receive the stream of gas comprising dust and ammonia, located on one end of the scrubber;
- one gas outlet (13) adapted to exhaust a stream of gas depleted of dust and ammonia, located on the casing of the scrubber;
- a dust filter packing (11) and an ammonia filter packing (12);
- two or more internal walls (3, 4) having an essentially circular or polygonal perimeter, each with a smaller diameter than the diameter of the casing (2), wherein:
- the internal walls (3, 4) extend from one end to the other end of the scrubber,
- the internal walls (3, 4) are concentric,
- the gas inlet is located within the circular or polygonal perimeter set by at least one of said internal walls (3, 4), and,
- each internal wall comprises two or more gas passages comprising filter packings, which filter packings can either be dust filter packings (11) or ammonia filter packings (12), but not both.

2. Scrubber (1) according to claim 1, wherein the gas inlet (10) is essentially located at the center of one end of the scrubber.

3. Scrubber (1) according to claim 1 or 2, wherein the gas outlet (13) comprises one filter packing.

4. Scrubber (1) according to claim 3, wherein the filter packing comprised in the gas outlet (13) is an ammonia filter packing.

5. Scrubber (1) according to any one of claims 1 to 4, wherein the internal wall with the smallest diameter comprises two or more dust filter packings (11).

6. Scrubber (1) according to any one of claims 1 to 5, the internal wall with the largest diameter comprises two or more ammonia filter packings (12).

7. Scrubber (1) according to any one of claims 1 to 6, wherein the two or more gas passages comprised in an internal wall are evenly distributed on the circumference of the internal wall.

8. Scrubber (1) according to any one of claims 1 to 7, wherein the scrubber comprises two internal walls, wherein:
- the internal wall with the smallest diameter (3) comprises four dust filter packings (11) and the four dust filter packings are evenly distributed on the circumference of the wall;
- the internal wall with the largest diameter (4) comprises three ammonia filter packings (12); and
- the gas outlet (13) comprises an ammonia filter packing (12).

9. Scrubber (1) according to any one of claims 1 to 8, wherein the internal walls (3, 4) and the casing (2) are concentric around the central axis.

10. Use of a scrubber (1) as defined in any one of claims 1 to 9 for the removal of dust and ammonia from a stream of gas comprising dust and ammonia.

11. A method for removing dust and ammonia from a stream of gas comprising dust and ammonia, comprising the steps of:
a) providing a scrubber (1) as defined in any one of claims 1 to 9
b) directing the stream of gas comprising dust and ammonia, into the gas inlet of the scrubber (10) provided in step a);
c) collecting the gas depleted of dust and ammonia from the gas outlet of the scrubber (13) for further processing.

12. Method according to claim 11, wherein the method comprises the step of adding water, as water droplets, to the stream of gas comprising dust and ammonia before the stream is directed into the scrubber.
